# EUROPÄISCHE PATENTSCHRIFT

(11) **EP 0 510 024 B1**
(45) Veröffentlichungstag und Bekanntmachung des Hinweises auf die Patenterteilung: **08.12.1993**
(21) Anmeldenummer: 91901649.3
(22) Anmeldetag: 09.01.1991
(51) Int. Cl.: B60P 1/44

(54) **STEUERVORRICHTUNG FÜR HYDRAULISCHE ARBEITSZYLINDER EINER LADEBORDWAND EINES FAHRZEUGES**
CONTROL DEVICE FOR HYDRAULIC WORKING CYLINDERS OF A SIDEBOARD OF A VEHICLE
DISPOSITIF DE COMMANDE POUR VERINS HYDRAULIQUES D'UNE RIDELLE D'UN VEHICULE

(30) Priorität: 10.01.1990 AT 46/90
(43) Veröffentlichungstag der Anmeldung: 28.10.1992
(73) Patentinhaber: Weber, Günter, A-2474 Gattendorf (AT)
(72) Erfinder: Weber, Günter, A-2474 Gattendorf (AT)
(74) Vertreter: Holzer, Walter, Dipl.-Ing.
(86) Internationale Anmeldenummer: AT9100005
(87) Internationale Veröffentlichungsnummer: WO9110577

(56) Entgegenhaltungen:
- DE-A- 3 724 226
- DE-U- 7 024 806
- GB-A- 1 202 673
- US-A- 2 848 122

## Beschreibung

Die Erfindung betrifft eine Steuervorrichtung für hydraulische Arbeitszylinder einer Ladebordwand eines Fahrzeuges, mit einer von einem Motor angetriebenen Hydraulikmediumpumpe, die mit einem Mediumvorrat und über Pumpenzweigleitungen mit jeweils einer Kammer eines Hubzylinders und eines Schließzylinders der Ladebord wand über zugeordnete Steuerventile in Verbindung setzbar ist, wobei ein Druckübersetzungs-Kolbenzylinder parallel zu den Pumpenzweigleitungen geschaltet ist.

Gemäß einem nicht vorveröffentlichten älteren Vorschlag (AT-A-392 447) wird an die mit dem Schließzylinder in Verbindung stehende Kammer der kleineren Kolbenseite des Druckübersetzungs-Kolbenzylinders ein elektrischer Druckschalter, mit welchem bei Uberschreitung eines vorbestimmten Druckes der Pumpenmotorantrieb stillsetzbar ist, oder ein einstellbares Hydraulikventil angeschlossen, über welches die Pumpenzweigleitungen absperrbar oder die Pumpenleitung mit einer Rückleitung zum Mediumvorrat in Verbindung setzbar und gegebenenfalls der Pumpenmotorantrieb stillsetzbar ist.

Mit dieser Vorrichtung wird auf konstruktiv einfache Weise erreicht, daß vor Auftreten einer Überlastung des Schließzylinders der Ladebordwand ein Stillsetzen des Pumpenmotors und/oder ein Absperren bzw. Entlasten der Hydraulikmediumzuleitung erfolgt.

Gemäß einer vorteilhaften Ausführungsform nach dem älteren Vorschlag ist vom elektrischen Druckschalter oder vom einstellbaren Hydraulikventil ein Zählwerk für die Anzahl der Drucküberschreitungen aktivierbar.

Die vorliegende Erfindung zielt auf eine Verbesserung ab, mit welcher nicht nur die Anzahl der zur Abschaltung bzw. Unterbrechung führenden Belastungsfälle, sondern auch die Höhe der maximalen Uberlastung des Schließzylinders festgestellt werden kann, die auftreten kann, wenn die Ladebordwand nach dem Abschalten des Pumpenmotors bzw. Unterbrechen der Hydraulikmediumleitung unzulässig weiter beladen wird und sodann gegebenenfalls ein Bruch des Schließzylinders auftritt. Die Erfindung zeichnet sich bei einer Steuervorrichtung der einleitend angegebenen Art dadurch aus, daß an den Schließzylinder ein mit einem Zählwerk und einem Unterbrecherschalter für die elektrische Pumpenmotor-Anschlüßleitung in Verbindung stehender elektrischer Druckschalter, mit welchem bei Uberschreitung eines vorbestimmten Druckes der Pumpenmotor stillsetzbar ist, und an diesen Druckschalter ein Manometer angeschlossen ist, das einen von außen nicht zugänglichen Schleppzeiger aufweist, welcher eine allfällige, nach Stillsetzen des Pumpenmotors erfolgte maximale Überbelastung der Ladebordwand anzeigt.

Durch die Erfindung wird ohne Möglichkeit einer Manipulation von Seiten der Bedienungsperson eine einwandfreie Anzeige einer unzulässigen Überbelastung der Ladebordwand erreicht.

Eine alternative Steuervorrichtung gemäß der Erfindung hat die Merkmale, daß an die mit dem Schließzylinder in Verbindung stehende Kammer der kleineren Kolbenseite des Druckübersetzungs-Kolbenzylinders ein einstellbares hydraulisches Wechsel- oder Sperrventil angeschlossen, über welches die Pumpenzweigleitungen absperrbar oder die Pumpenleitung mit einer Rückleitung zum Mediumvorrat in Verbindung setzbar und gegebenenfalls der Pumpenmotor stillsetzbar ist, und daß an den Schließzylinder ein Manometer angeschlossen ist, das einen von außen nicht zugänglichen Schleppzeiger aufweist, welcher eine allfällige, nach Aktivierung des einstellbaren Hydraulikventils erfolgte maximale Überbelastung der Ladebordwand anzeigt.

Die Erfindung wird nachfolgend an Ausführungsbeispielen unter Bezugnahme auf die Zeichnungen näher erläutert, in denen zeigen:
Fig. 1 ein hydraulisches Schaltschema einer Steuervorrichtung gemäß der Erfindung und
Fig. 2 ein Schaltschema einer alternativen Ausführungsform.

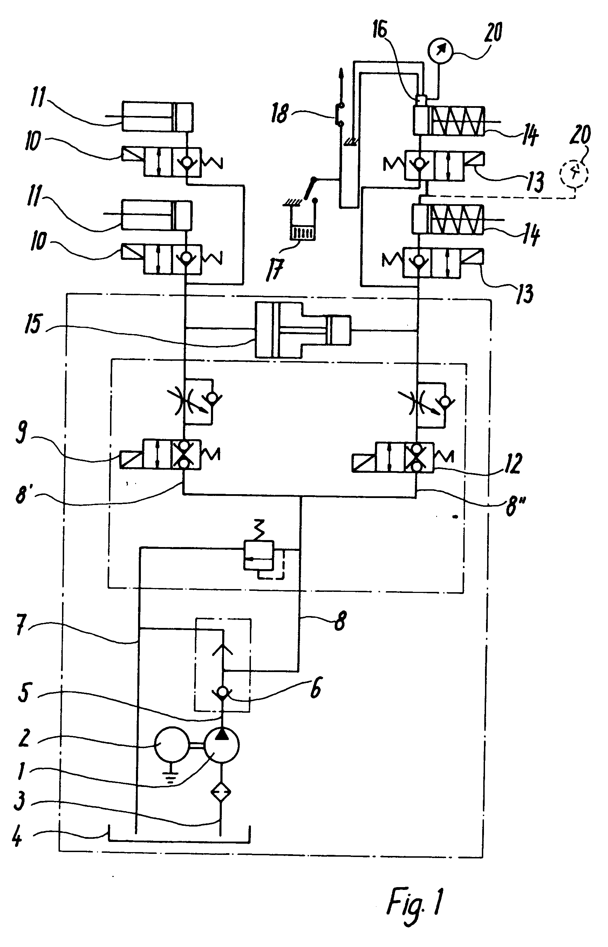

Gemäß Fig. 1 ist eine Hydraulikmediumpumpe 1 von einem Elektromotor 2 angetrieben und steht über eine Leitung 3 mit einem Hydraulikmediumvorrat 4 in Verbindung. Die Pumpe 1 steht ferner über eine Pumpenleitung 5, die ein Rückschlagventil 6 enthält, mit einer Mediumrückleitung 7 und einer Leitung 8 in Verbindung, die sich in Zweigleitungen 8', 8" verzweigt. Der in Fig. 1 linke Zweig 8' speist über ein steuerbares Hubventil 9 und zwei steuerbare Hubzylinderventile 10 zwei Hubzylinder 11 der nicht gezeigten Ladebordwand.

Analog speist die in Fig. 1 rechte Zweigleitung 8" über ein steuerbares Schließventil 12 und zwei steuerbare Schließzylinderventile 13 zwei Schließzylinder 14 der Ladebordwand. Zwischen den Ventilen 9 und 10 einerseits sowie 12 und 13 anderseits ist an die Zweigleitungen 8', 8" ein Druckübersetzer-Kolbenzylinder 15 parallel geschaltet, dessen größere Kolbenseite dem Hubzylinder zugekehrt ist.

An einen der beiden Schließzylinder 14 ist gemäß Fig. 1 ein einstellbarer elektrischer Druckschalter 16 angeschlossen, der seinerseits mit einem Zählwerk 17 und einem Unterbrecherschalter 18 für die elektrische Pumpenmotor-Anschlußleitung in Verbindung steht. Der Druckschalter 16 ist z.B. auf 220 bar eingestellt, wenn die linke Seite des Druckübersetzers auf 180 bar eingestellt ist. Erfindungsgemäß ist an den Druckschalter 16 auch ein Manometer 20 angeschlossen, das gegebenenfalls mit dem Zählwerk 17 in einem Gehäuse integriert ist. Das Manometer bzw. das Gehäuse ist in der Steueranlage der Ladebordwand versiegelt angeordnet. Das Zählwerk 17 schaltet jeweils bei Erreichen des voreingestellten Druckes bzw. bei der ansonsten auftretenden Überlastung um eine Stelle weiter, um die Anzahl der möglichen Lastüberschreitungen über einen längeren Zeitraum zu registrieren. Das Manometer 20 ist mit einem von außen nicht zugänglichen Schleppzeiger ausgestattet, der im Falle einer Weiterbeladung der Ladebordwand nach Überschreitung der zulässigen Höchstbelastung und Stillsetzen des Pumpenmotors den bei dieser unzulässigen Überbelastung aufgetretenen höchsten Druck im Schließzylinder anzeigt.

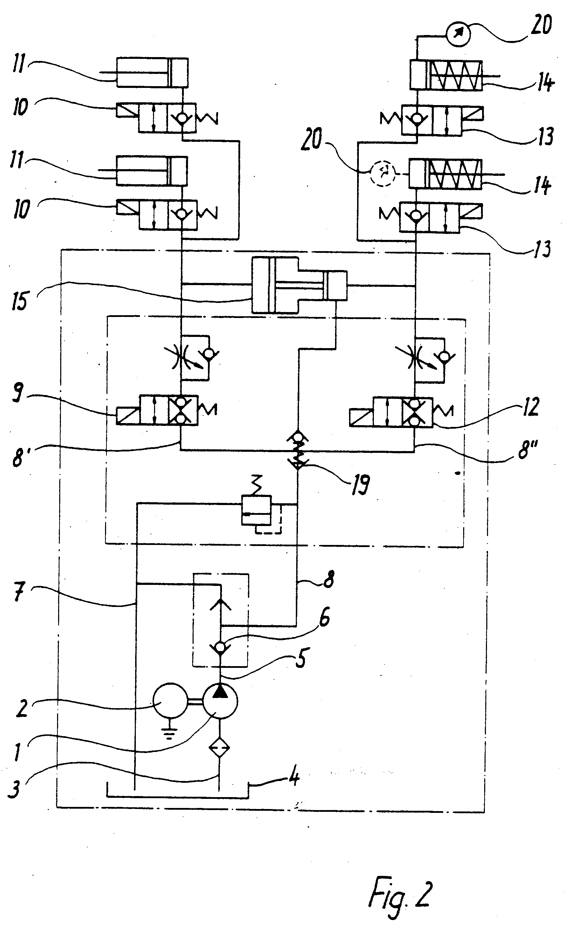

Gemäß der in Fig. 2 gezeigten Ausführungsform ist der Druckschalter 16 nach Fig. 1 durch ein an die kleinere Kammer des Druckübersetzer-Kolbenzylinders 15 angeschlossenes einstellbares hydraulisches Wechselventil oder Sperrventil 19 ersetzt, welches an der Verzweigungsstelle der Pumpenzweigleitungen 8', 8" eingeschaltet ist und diese bei Überschreiten eines bestimmten Druckes von z.B. 220 bar absperrt. Gegebenenfalls kann über dieses Hydraulikventil auch die elektrische Pumpenmotorspeiseleitung unterbrochen werden. Statt des dargestellten Hydraulikventiles könnte auch ein Kolbenschieber od.dgl. vorgesehen werden. Über das Hydraulikventil kann auch ein Zählwerk analog dem Zählwerk 17 aktiviert werden.

An einen der Schließzylinder 14 ist wie bei der Ausführungsform nach Fig. 1 ein Manometer 20 angeschlossen, welches die schon erläuterte Funktion hat.

Die Erfindung ist nicht auf die dargestellten Beispiele beschränkt, diese können vielmehr im Rahmen des allgemeinen Erfindungsgedankens verschiedentlich abgewandelt werden. So kann insbesondere bei der in Fig. 2 gezeigten Ausführung ein hydraulisches Wechsel- oder Sperrventil 19 vorgesehen werden, welches im Falle einer Überlastung die Pumpenleitung 8 mit der Mediumrückleitung 7 in Verbindung setzt, so daß die Pumpe leer läuft.

## Patentansprüche

1. Steuervorrichtung für hydraulische Arbeitszylinder einer Ladebordwand eines Fahrzeuges, mit einer von einem Motor angetriebenen Hydraulikmediumpumpe, die mit einem Mediumvorrat und über Pumpenzweigleitungen mit jeweils einer Kammer eines Hubzylinders und eines Schließzylinders der Ladebordwand über zugeordnete Steuerventile in Verbindung setzbar ist, wobei ein Druckübersetzungs-Kolbenzylinder parallel zu den Pumpenzweigleitungen geschaltet ist, dadurch gekennzeichnet, daß an den Schließzylinder (14) ein mit einem Zählwerk (17) und einem Unterbrecherschalter (18) für die elektrische Pumpenmotor-Anschlußleitung in Verbindung stehender elektrischer Druckschalter (16), mit welchem bei Überschreitung eines vorbestimmten Druckes der Pumpenmotor (2) stillsetzbar ist, und an diesen Druckschalter (16) ein Manometer (20) angeschlossen ist, das einen von außen nicht zugänglichen Schleppzeiger aufweist, welcher eine allfällige, nach Stillsetzen des Pumpenmotors (2) erfolgte maximale überbelastung der Ladebordwand anzeigt.

2. Steuervorrichtung für hydraulische Arbeitszylinder einer Ladebordwand eines Fahrzeuges, mit einer von einem Motor angetriebenen Hydraulikmediumpumpe, die mit einem Mediumvorrat und über Pumpenzweigleitungen mit jeweils einer Kammer eines Hubzylinders und eines Schließzylinders der Ladebordwand über zugeordnete Steuerventile in Verbindung setzbar ist, wobei ein Druckübersetzungs-Kolbenzylinder parallel zu den Pumpenzweigleitungen geschaltet ist, dadurch gekennzeichnet, daß an die mit dem Schließzylinder (14) in Verbindung stehende Kammer der kleineren Kolbenseite des Druckübersetzungs-Kolbenzylinders ein einstellbares hydraulisches Wechsel- oder Sperrventil (19) angeschlossen, über welches die Pumpenzweigleitungen (8'. 8'') absperrbar oder die Pumpenleitung (8) mit einer Rückleitung (7) zum Mediumvorrat (4) in Verbindung setzbar und gegebenenfalls der Pumpenmotor (2) stillsetzbar ist, und daß an den Schließzylinder (14) ein Manometer (20) angeschlossen ist, das einen von außen nicht zugänglichen Schleppzeiger aufweist, welcher eine allfällige, nach Aktivierung des einstellbaren Hydraulikventils (19) erfolgte maximale Überbelastung der Ladebordwand anzeigt.

## Claims

1. Control device for a hydraulic actuating cylinder of a tailgate of a vehicle, comprising a motor-driven hydraulic medium pump which can be connected via associated control valves to a medium reservoir and via pump branch conduits to a chamber each of a lifting cylinder and a closing cylinder of the tailgate, a pressure-intensifier piston cylinder being connected in parallel to the pump branch conduits, characterized in that an electrical manometric switch (16) is connected to the closing cylinder (14), the switch itself being connected to a counter (17) and an interrupter (18) for the line of the electrical pump motor, which manometric switch stops the pump motor (2) when a predetermined pressure is exceeded, a pressure gauge (20) being connected to this manometric switch (16) and comprising a trailing pointer which indicates a possible maximum overload of the tailgate after the pump motor (2) has been stopped.

2. Control device for the hydraulic actuating cylinder of a tailgate of a vehicle, comprising a motor-driven hydraulic medium pump which can be connected via associated control valves to a medium reservoir and via pump branch conduits to a chamber each of a lifting cylinder and a closing cylinder of the tailgate, a pressure-intensifier piston cylinder being connected in parallel to the pump branch conduits, characterized in that an adjustable hydraulic switching and locking valve (19) is connected to the chamber of the smaller piston side of the pressure-intensifier piston cylinder, which chamber is connected to the closing cylinder (14), by means of which hydraulic valve the pump branch conduits (8, 8") can be locked or the pump conduit (8) connected with a return conduit (7) to the medium reservoir (4) and by means of which hydraulic valve preferably the pump motor (2) can be stopped, and in that a pressure gauge (20) is connected to the closing cylinder (14) which comprises a trailing pointer not accessible from outside, which pointer indicates any maximum overload of the tailgate after activation of the adjustable hydraulic valve (19).

## Revendications

1. Dispositif de commande des vérins hydrauliques d'un hayon de véhicule formant plate-forme de chargement, comportant une pompe à fluide hydraulique entraînée par un motor, laquelle pompe, par des valves correspondantes, peut être mise en communication avec un réservoir de liquide hydraulique et, à travers des conduites secondaires, avec une chambre respectivement d'un vérin de levage et d'un vérin de fermeture du hayon, un ensemble piston-cylindre multiplicateur de pression étant branché en parallèle avec les conduites secondaires, charactérisé par le fait qu'un mano-contacteur (16) électrique, qui est en communication avec un dispositif compteur (17) et un disjoncteur (18) pour la ligne de raccordement électrique du moteur de la pompe, et au moyen duquel on peut arrêter le moteur (2) de la pompe lorsque la pression dépasse une valeur prédéterminée, est connecté au vérin de fermeture (14), et que, à cet mano-contacteur (16), est connecté un manomètre (20) comportant une aiguille entraînée, inaccessible de l'exterieur, qui indique une surcharge éventuelle maximale du hayon qui s'est produite après l'arrêt du moteur (2) de la pompe.

2. Dispositif de commande des vérins hydrauliques d'un hayon de véhicule formant plate-forme de chargement, comportant une pompe à fluide hydraulique entraînée par un motor, laquelle pompe, par des valves correspondantes, peut être mise en communication avec un réservoir de liquide hydraulique et, à travers des conduites secondaires, avec une chambre respectivement d'un vérin de levage et d'un vérin de fermeture du hayon, un ensemble piston-cylindre multiplicateur de pression étant branché en parallèle avec les conduites secondaires, charactérisé par le fait qu'une valve hydraulique à deux voies ou d'arrêt (19) réglable, au moyen de laquelle on peut fermer les conduites secondaires (8', 8'') ou mettre la conduite de pompe (8) en communication avec une conduite de retour (7) menant au réservoir de liquide hydraulique (4) et éventuellement arrêter le moteur (2) de la pompe, est connecté à la chambre de l'ensemble piston-cylindre multiplicateur de pression qui est située petit côté du piston et communique avec le vérin de fermeture (14), et par le fait qu'au vérin de fermeture (14) est connecté un manomètre (20) comportant une aiguille entraînée, inaccessible de l'exterieur, qui indique une surcharge éventuelle maximale du hayon qui s'est produite après l'activation de la valve hydraulique réglable (19).
